# FASCICULE DE BREVET EUROPEEN

(11) **EP 1 366 955 B1**
(45) Date de publication et mention de la délivrance du brevet: **26.10.2005**
(21) Numéro de dépôt: 03291195.0
(22) Date de dépôt: 20.05.2003
(51) Int. Cl.: B60Q 1/12, B60Q 1/10

(54) **Dispositif de sécurité anti-éblouissement pour projecteur de véhicule automobile**
Antiblendsicherheitsvorrichtung für Kfz-Scheinwerfer
Anti-dazzle safety device for vehicle headlamp

(30) Priorité: 27.05.2002 FR 0206457
(43) Date de publication de la demande: 03.12.2003
(73) Titulaire: VALEO VISION, 93012 Bobigny Cédex (FR)
(72) Inventeur: Dari, Alain, 94120 Fontenay sous Bois (FR); Moizard, Julien, 75019 Paris (FR); Sadoux, Grégoire, 92600 Asnieres sur Seine (FR)
(74) Mandataire: Renous Chan, Véronique

(56) Documents cités:
- EP-A- 0 830 982
- FR-A- 2 813 829
- FR-A- 2 822 425

## Description

La présente invention a pour objet un dispositif de sécurité pour projecteur de véhicule automobile, le projecteur comportant
au moins une source lumineuse associée à un réflecteur pour produire un faisceau lumineux ayant notamment une direction instantanée contenue dans un plan horizontal ou sensiblement horizontal, un mécanisme de déplacement horizontal du faisceau lumineux comportant notamment un premier moteur pour faire évoluer la direction horizontale instantanée du faisceau lumineux et un système de correction automatique de portée d'éclairage du projecteur comportant notamment un deuxième moteur ou un dispositif de contrôle d'assiette du véhicule pour faire évoluer verticalement le faisceau lumineux ; et le dispositif comportant
un capteur de position pour déterminer une information relative à la direction instantanée du faisceau lumineux, et des moyens pour comparer l'information relative à la direction horizontale instantanée du faisceau lumineux et une commande de déplacement horizontal du faisceau lumineux, lesdits moyens pouvant actionner le deuxième moteur du système de correction automatique de portée d'éclairage ou le dispositif de contrôle d'assiette du véhicule pour orienter le faisceau lumineux vers le bas lorsque l'information relative à la direction instantanée du faisceau lumineux et la commande de déplacement horizontal du faisceau lumineux ne sont pas concordantes.

La présente invention a notamment pour but de permettre l'utilisation d'un système d'éclairage appelé "code virage" sans risquer d'éblouir le conducteur d'un véhicule croisé en cas de dysfonctionnement du système d'éclairage code virage.

Le domaine de l'invention est, d'une façon générale, celui des projecteurs de véhicule automobile. Dans ce domaine, on connaît différents types de fonctions, parmi lesquels on trouve notamment :
- des feux de position, d'intensité et de portée faible ;
- des feux de croisement, ou codes, d'intensité plus forte et de portée sur la route avoisinant 70 mètres, qui sont utilisés essentiellement la nuit et dont la répartition du faisceau lumineux est telle qu'elle permet de ne pas éblouir le conducteur d'un véhicule croisé ;
- des feux de route, et des feux de complément de type longue portée, dont la zone de vision sur la route avoisine 200 mètres, et qui doivent être éteints lorsque l'on croise un autre véhicule afin de ne pas éblouir son conducteur ;
- des feux anti-brouillard.

Par ailleurs, on connaît certains projecteurs perfectionnés, appelés projecteurs bimodes, qui cumulent les fonctions de feux de croisement et de feux de route: à cet effet, on dispose à l'intérieur du projecteur bimode un cache amovible, constitué par exemple d'une plaque métallique, pouvant passer sur commande d'une première position dans laquelle il n'occulte pas le signal lumineux produit par la source lumineuse du projecteur, la portée du projecteur correspondant alors à celle des feux de route, à une deuxième position dans laquelle il occulte une partie du signal lumineux produit par la source lumineuse du projecteur, la portée du projecteur étant ainsi limitée à celle des feux de croisement.

Le dispositif selon l'invention peut être mis en place dans l'un quelconque des types de projecteurs qui viennent d'être mentionnés. Sa mise en place sera plus particulièrement détaillée avec les feux de croisement en réponse à un problème particulier donné à titre d'exemple uniquement.

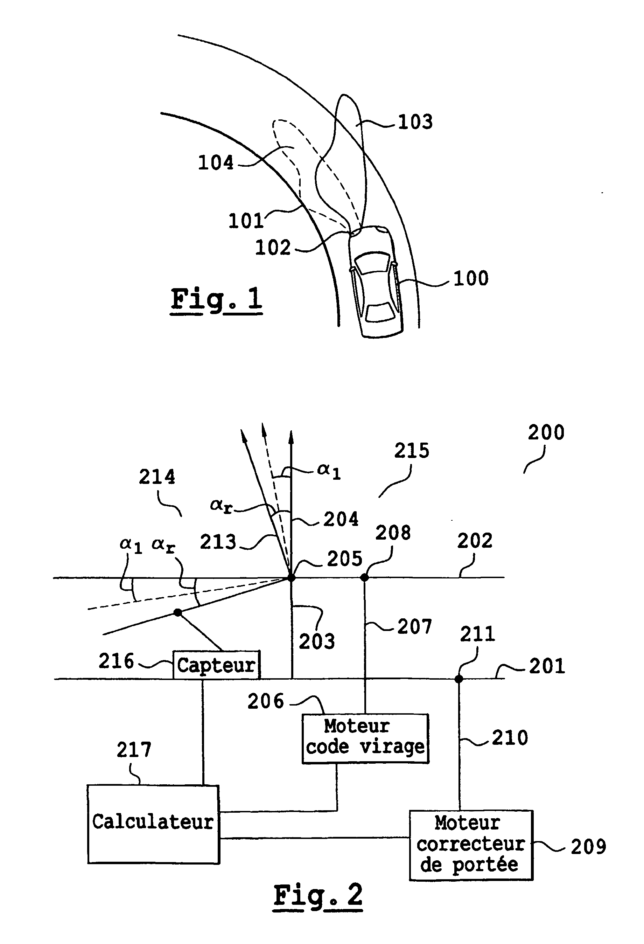

On connaît, dans l'état de la technique, le système d'éclairage code virage qui permet d'obtenir, au moyen des feux de croisement, un faisceau lumineux qui éclaire de façon optimale un virage négocié par un véhicule. Un tel système est illustré à la figure 1. Sur cette figure, on a représenté de façon schématique un véhicule 100 qui emprunte une route en virage 101. L'avant du véhicule est équipé d'un ensemble de projecteurs, et notamment de feux de croisement 102. Un feu de croisement, ou code, habituel éclaire le virage avec un faisceau lumineux 103 représenté en traits pleins. Comme on le constate, une partie du faisceau lumineux 103 n'éclaire pas la route, et l'intérieur du virage n'est pas couvert par le faisceau lumineux 103. L'éclairage de la route au moyen des feux de croisement n'est donc pas optimal et entraîne un manque de visibilité qui peut être dangereux pour le conducteur.

En réponse à ce problème, il a été proposé l'utilisation d'un système de codes virages, dans lequel les feux de croisement présentent la particularité de fournir un faisceau lumineux 104, représenté en traits pointillés, qui peut évoluer horizontalement. Le faisceau du projecteur est ainsi orienté, notamment grâce à la présence d'un moteur approprié, selon une direction horizontale qui peut varier en prenant en considération les conditions de la route et du véhicule, telles que la présence d'un virage, l'orientation et la vitesse du véhicule... Comme on le voit à la figure 1, la partie intérieure du virage 101 est ainsi bien mieux couverte avec le deuxième faisceau lumineux 104 qu'avec le premier faisceau lumineux 103. La forme des faisceaux lumineux 103 et 104, avec un étalement sur la droite, correspond à la forme des faisceaux lumineux que l'on peut observer sur des véhicules circulant dans des pays où la circulation est imposée sur la partie droite de la chaussée. Dans les autres pays, les feux de croisement sont conçus pour que l'on observe un étalement sur la gauche du faisceau lumineux 103.

Le système de codes virages permet donc d'obtenir de façon automatique un déplacement horizontal du faisceau lumineux. Par déplacement horizontal du faisceau lumineux, on désigne le fait que ce dernier est susceptible d'évoluer horizontalement autour d'un axe fictif vertical, c'est à dire perpendiculaire au plan de déplacement du véhicule, passant approximativement par le projecteur à l'origine du faisceau lumineux. Par direction horizontale, on désigne une direction contenue dans le plan de déplacement du véhicule.

Cependant, le système de codes virages présente un risque non négligeable : au moins un des codes peut demeurer malencontreusement bloqué dans une position telle qu'il éblouirait le conducteur d'un véhicule croisé ultérieurement. Typiquement, si le code reste bloqué dans la position dans laquelle il produit le faisceau lumineux 104, lorsque le véhicule 100 sera de nouveau sur une portion de route droite, il éblouira inévitablement tout conducteur d'un véhicule croisé.

Une solution à ce problème peut consister en la réalisation d'un système redondant de déplacement horizontal du faisceau lumineux : un tel système consisterait à prévoir notamment un autre moteur qui pourrait suppléer le moteur initialement prévu pour le système de codes virages en cas de dysfonctionnement du moteur initial, afin de ramener le faisceau lumineux dans la zone non éblouissante. Mais une telle solution n'est pas satisfaisante car elle pose notamment des problèmes de coût de fabrication et de poids du système d'éclairage.

Par ailleurs, il est connu par le document FR-2813829, un projecteur d'éclairage de véhicule comportant une installation de sécurité.

Le projecteur selon FR-2813829 comprend un élément formant une coupure et qui peut basculer en fonction du tracé de la chaussée devant le véhicule, par l'action d'une première installation de réglage. De plus, il est prévu une seconde installation de réglage réglant la portée d'éclairage en faisant basculer ledit élément autour d'un axe sensiblement horizontal. L'installation de sécurité surveille le fonctionnement de la première l'installation de réglage et, en cas de défaut, réduit la puissance d'alimentation de la source lumineuse ou la portée du faisceau lumineux.

Par le document EP-0830982, il est également connu d'intégrer un calculateur dans un projecteur d'éclairage de véhicules afin de commander un angle d'éclairage du faisceau d'éclairage dans un plan horizontal. La commande foumit par le calculateur fait ici appel à une comparaison entre une information de consigne de position angulaire et une information représentant la position angulaire effective du faisceau dans le plan horizontal. Le dispositif selon l'invention répond au risque et au problème qui viennent d'être exposés. D'une façon générale, le dispositif selon l'invention propose une solution qui permet l'utilisation de sources lumineuses produisant un faisceau lumineux orientable horizontalement sans risquer que ce dernier demeure bloqué dans une position éblouissante. Le dispositif selon l'invention peut facilement être mis en oeuvre, c'est à dire sans entraîner de surcoût de fabrication ou d'ajout de trop nombreux éléments de contrôle.

A cet effet, l'invention tire notamment parti du fait de la présence soit d'un second moteur dans les dispositifs projecteurs des véhicules, ce second moteur étant attaché à un système de correction automatique de portée d'éclairage du projecteur, soit d'un dispositif de contrôle d'assiette du véhicule lui-même. De tels dispositifs ont pour fonction de maintenir constante la portée du projecteur en fonction de la charge du véhicule et/ou de son assiette, notamment quand le véhicule accélère. Il peut donc s'agir d'un système de correction dynamique et/ou statique. Ainsi, par exemple, lorsque le véhicule accélère, le faisceau lumineux est légèrement abaissé et lorsque le véhicule freine, le faisceau lumineux est légèrement remonté. Le moteur du système de correction de portée d'éclairage intervient donc sur la direction verticale du faisceau lumineux.

En outre, dans l'invention, on exploite deux informations essentielles : d'une part une information relative à une direction horizontale du faisceau lumineux, cette information étant obtenue au moyen d'un capteur de position; d'autre part une information relative à une instruction de déplacement horizontal du faisceau lumineux. Ces deux informations sont traitées et confrontées au sein d'un calculateur qui permet de déterminer si elles ne sont pas antagonistes. S'il n'y a pas de concordance entre les deux informations, le calculateur peut alors faire adopter un mode de fonctionnement dégradé du projecteur en le contraignant à orienter le faisceau lumineux vers le bas afin de supprimer tout risque d'éblouissement d'un conducteur croisé. A cet effet, le calculateur commande le moteur de correction de portée, ou le dispositif de contrôle d'assiette, pour provoquer une déviation verticale, maximale et vers le bas du faisceau lumineux.

L'invention concerne donc essentiellement un dispositif de sécurité pour projecteur de véhicule automobile, le projecteur comportant au moins :
- une source lumineuse associée à un réflecteur pour produire un faisceau lumineux caractérisé notamment par une direction instantanée contenue dans un plan horizontal ou sensiblement horizontal;
- un mécanisme de déplacement horizontal du faisceau lumineux comportant notamment un premier moteur pour faire évoluer la direction instantanée du faisceau lumineux; et
- un système de correction automatique de portée d'éclairage du projecteur comportant notamment un deuxième moteur, ou un dispositif de contrôle d'assiette du véhicule, pour faire évoluer verticalement le faisceau lumineux ; et le dispositif comportant :
   - un capteur de position pour déterminer une information relative à la direction instantanée du faisceau lumineux ; et
   - des moyens pour comparer l'information relative à la direction horizontale instantanée du faisceau lumineux et une commande de déplacement horizontal du faisceau lumineux, lesdits moyens pouvant actionner le deuxième moteur du système de correction automatique de portée d'éclairage ou le dispositif de contrôle d'assiette du véhicule pour orienter le faisceau lumineux vers le bas lorsque l'information relative à la direction instantanée du faisceau lumineux et la commande de déplacement horizontal du faisceau lumineux ne sont pas concordantes;
   caractérisé en ce que lesdits moyens sont constitués par un calculateur qui n'autorise l'orientation vers le bas dudit faisceau d'éclairage que lorsque l'information relative à la direction instantanée du faisceau lumineux et la commande de déplacement horizontal du faisceau lumineux ne sont pas concordantes et que la valeur d'un angle défini entre une direction de référence et la direction instantanée est supérieure à la valeur d'un angle de référence, l'angle de référence étant défini entre la direction de référence et une direction limite de non éblouissement.

On comprend au sens de l'invention par horizontal ou sensiblement horizontal un plan qui peut être effectivement strictement horizontal ou qui est faiblement incliné par rapport à l'horizontal, notamment d'un angle inférieur à 0°, notamment compris entre -0.25° et -1.5 °(le signe négatif signifiant que les projecteurs vont projeter de la lumière légèrement inclinée vers le bas).

Le dispositif selon l'invention peut en outre présenter une ou plusieurs des caractéristiques suivantes :
- l'angle de référence est par exemple compris entre 0 degré et 5 degrés, et de préférence compris entre 0,5 degré et 2 degrés.
- la direction limite de non éblouissement est définie uniquement d'un côté de la direction de référence.
- la direction de référence correspond à une direction instantanée du faisceau lumineux quand le véhicule circule en ligne droite.
- le capteur de position est de type tout ou rien pour détecter uniquement le passage de la direction instantanée du faisceau lumineux au niveau de la direction limite de non éblouissement.
- le capteur de position est un capteur de lumière, pouvant notamment être placé dans le projecteur, ou un capteur rotatif, pouvant notamment être placé à une liaison placée entre une première platine du projecteur, adaptée à la correction d'assiette, et une deuxième platine du projecteur, mobile par rapport à la première platine.
- le calculateur est monté dans le projecteur ou hors du projecteur.
- le capteur de position est monté sur une première platine du projecteur, ou sur une deuxième platine du projecteur mobile par rapport à la première platine.
- chaque projecteur est associé à un calculateur ou deux projecteurs identiques sont associés à un unique calculateur.
- l'orientation du faisceau lumineux vers le bas suite à l'actionnement du deuxième moteur par le calculateur permet d'obtenir un faisceau lumineux plus bas qu'avec le système de correction automatique de portée d'éclairage commandant le deuxième moteur sans l'intervention du calculateur.
- le projecteur associé au système de correction est un feu de croisement.
- le mécanisme de déplacement horizontal du faisceau lumineux est automatiquement actionné lorsque le véhicule automobile évolue dans un virage de façon à éclairer de façon optimale la trajectoire empruntée par le véhicule.

L'invention concerne également un véhicule automobile équipé d'un dispositif de sécurité qui vient d'être mentionné, et notamment un véhicule automobile avec un dispositif de sécurité qui comporte notamment un calculateur commun à deux projecteurs ayant la même fonction, le calculateur étant disposé à l'extérieur des projecteurs, ou un calculateur affecté à chaque projecteur, chaque calculateur étant disposé à l'intérieur de chaque projecteur. En outre, le véhicule automobile selon l'invention peut comporter un système de contrôle d'assiette intervenant dans le dispositif de sécurité.

L'invention et ses différentes applications seront mieux comprises à la lecture de la description qui suit et à l'examen des figures qui l'accompagnent. Celles-ci ne sont présentées qu'à titre indicatif et nullement limitatif de l'invention. En particulier, le dispositif projecteur selon l'invention est illustré dans le cas d'une utilisation dans un feu de croisement, mais ce dispositif convient pour tout dispositif projecteur d'un véhicule. Les figures montrent :
- à la figure 1, déjà décrite, une illustration de l'utilisation d'un système de codes virages ;
- à la figure 2, une illustration simplifiée du dispositif selon l'invention dans une première position du faisceau lumineux ;
- à la figure 3, une illustration simplifiée du dispositif selon l'invention dans une deuxième position du faisceau lumineux.

La figure 2 montre , en vue de dessus et de façon simplifiée, un projecteur 200 de véhicule automobile. Le projecteur 200 comporte notamment une première platine 201 orientée verticalement pour la correction d'assiette et une deuxième platine 202 mobile par rapport à la première platine 201 et orientée par le système de correction du code virage. Sur la platine mobile 202 sont notamment fixés un réflecteur et une source lumineuse non représentés, qui donnent naissance à un faisceau lumineux. Un ensemble de liaisons 203 permet de maintenir la platine mobile 202 solidaire de la première platine 201. L'ensemble de liaisons 203 peut adopter différentes structures et articulations.

Lorsque le véhicule se déplace de façon rectiligne, c'est à dire sur une portion de route sans virage, la direction du faisceau lumineux est repérée au moyen d'un axe horizontal principal appelé direction horizontale de référence 204. Cet axe principal est contenu dans un plan horizontal, c'est à dire un plan approximativement parallèle à la route empruntée par le véhicule. L'axe principal peut également être contenu dans un plan sensiblement horizontal, c'est à dire dans un plan faiblement incliné par rapport à l'horizontal, l'angle d'inclinaison étant de préférence compris entre -0,25 degré et -1,5 degré, le signe négatif désignant un plan dirigé vers le bas. A chaque instant, le projecteur 200 allumé émet un faisceau lumineux caractérisé notamment par une direction horizontale instantanée, désignée dans la suite de la description comme simplement une direction horizontale.

Le projecteur 200 comporte également un premier moteur 206, dit moteur code virage, qui permet de faire bouger la première platine 201 de façon à déplacer le faisceau lumineux horizontalement comme il l'a été expliqué précédemment. A cet effet, le moteur code virage 206 peut par exemple contrôler au moins une tige 207 emboîtée dans au moins une capsule 208 ménagée dans la platine mobile 202 de telle sorte que le projecteur 200 puisse évoluer autour d'un axe fictif de rotation vertical 205 perpendiculaire à la direction horizontale de référence 204.

Le projecteur 200 peut comporter par ailleurs un deuxième moteur 209, dit moteur de correction de portée, qui permet de faire bouger la première platine 201 de façon à déplacer le faisceau lumineux verticalement comme il l'a également été expliqué précédemment dans le cadre du système de correction automatique de portée d'éclairage du projecteur. A cet effet, le moteur de correction de portée 209 peut par exemple contrôler au moins une tige 210 emboîtée dans au moins une capsule 211 ménagée dans la première platine 201 de telle sorte que le projecteur 200 puisse évoluer autour d'un axe fictif de rotation horizontal, non représenté, perpendiculaire à la direction horizontale de référence 204. La première platine 201 peut également être mise en mouvement par un dispositif de contrôle d'assiette présent dans certains véhicules, notamment les véhicules à suspension automatisée

Le moteur code virage 206 et le moteur de correction de portée 209 - ou le dispositif de contrôle d'assiette - sont contrôlés par le calculateur 217 qui, afin de commander les différents mouvements à inculquer au projecteur, rassemble et interprète un ensemble de paramètres associés au véhicule et à la route sur laquelle il se déplace, par exemple la vitesse du véhicule, l'orientation de ses roues, son accélération ou sa décélération, une information d'angle volant ou encore une information d'assiette.

Selon l'invention, on définit une direction horizontale limite de non éblouissement 213 passant par l'axe de rotation 205. Lorsque suite à un mouvement de rotation autour de l'axe vertical 205, la direction horizontale du faisceau lumineux s'est écartée de la direction horizontale de référence 204 suffisamment pour dépasser la direction horizontale limite de non éblouissement 213, on considère que le faisceau lumineux est entré dans une zone d'éblouissement 214.

En d'autres termes, la direction horizontale limite de non éblouissement 213 sépare le plan horizontal en deux zones : une première zone, dite zone de non éblouissement 215 dans laquelle doit se trouver la direction horizontale du faisceau lumineux pour ne pas éblouir un conducteur croisé, et une deuxième zone dite zone d'éblouissement 214, dans laquelle on risque d'éblouir un conducteur croisé lorsque s'y trouve la direction horizontale du faisceau lumineux. La position relative de la direction horizontale du faisceau lumineux par rapport à la direction horizontale de référence 204 peut être repérée par un angle, dit angle d'écartement horizontal α. On définit un angle d'écartement de référence αr, qui est de préférence compris entre 0 degré et 5 degrés, notamment entre 0,5 degré et 2 degrés, entre la direction horizontale de référence 204 et la direction horizontale limite de non éblouissement 213.

En fonction du sens imposé de la circulation, la direction horizontale limite de non éblouissement 213 est définie à gauche (circulation à droite) ou à droite (circulation à gauche) de la direction horizontale de référence 204. Ainsi, dans le cas illustré, qui correspond au cas d'une circulation à droite, un faisceau lumineux bloqué dans la zone de non éblouissement 215, quel que soit la déviation de sa direction horizontale par rapport à la direction horizontale de référence 204, n'éblouira pas un conducteur croisé. Il n'est donc pas indispensable de définir une direction limite de non éblouissement dans la zone de non éblouissement 215.

On peut prévoir, afin d'améliorer la détection d'un éventuel dysfonctionnement du moteur code virage 206, de définir dans le dispositif de l'invention deux directions limites de non éblouissement réparties de part et d'autre de la direction horizontale de référence 204, par exemple de façon symétrique par rapport à cette direction. Une telle réalisation peut être particulièrement utile dans les systèmes qui peuvent être utilisés à la fois pour le trafic à droite et pour le trafic à gauche.

Dans l'invention, on prévoit l'utilisation d'un capteur de position 216 et d'un calculateur 217. Un calculateur est typiquement constitué d'un microprocesseur associé à une mémoire de programmes et/ou une mémoire de données. Dans l'exemple illustré, le capteur 216 est monté sur la première platine 201 du projecteur 200, mais dans d'autres exemples de réalisation du dispositif selon l'invention, il aurait pu être monté à d'autres endroits, par exemple sur la platine mobile 202. Dans l'exemple de réalisation considéré, le capteur 216 est du type tout ou rien, c'est à dire qu'il peut passer d'un état actif à un état inactif et vice-versa. Dans l'invention, le capteur 216 est activé dès que la platine mobile est en mouvement par rapport à la première platine et qu'elle a effectué une rotation autour de l'axe vertical 205 d'un angle α supérieur à αr, c'est à dire lorsque la direction horizontale du faisceau lumineux est entrée dans la zone d'éblouissement 214.

Pour comparer les angles α et αr, il est important de prendre, pour αr, la valeur algébrique de l'angle entre la direction horizontale de référence 204 et la direction horizontale limite de non éblouissement 213, et, pour α, la valeur algébrique de l'angle entre la direction horizontale de référence 204 et la direction horizontale du faisceau lumineux, en choisissant le sens positif de rotation tel que ar soit positif. La valeur de l'angle ar peut par exemple être mémorisée dans une mémoire de données du calculateur 217. Le capteur 216 de type tout ou rien détecte simplement une transition correspondant au passage de la direction horizontale instantanée au niveau de la direction horizontale limite de non éblouissement 213. Un tel capteur est très fiable et robuste.

D'autres types de capteurs peuvent être utilisés dans le dispositif selon l'invention : on peut notamment faire intervenir un capteur de lumière, qui, placé dans le projecteur 200, permet de détecter la transition entre la zone éblouissante 214 et la zone non éblouissante 215; ou encore un capteur rotatif, qui, placé au niveau de la liaison 203 entre la platine mobile 202 et la première platine 201, permet également de détecter la transition entre la zone éblouissante 214 et la zone non éblouissante 215.

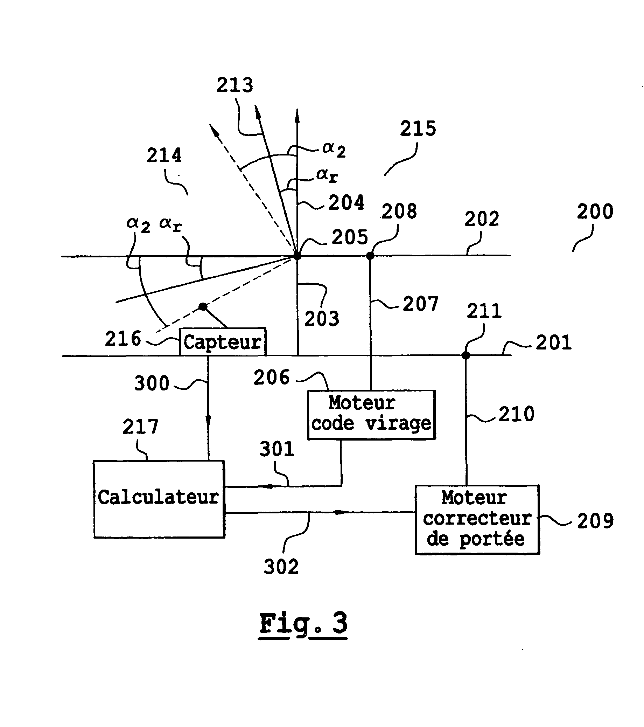

Quel que soit le type de capteur 216 utilisé, on peut définir un mode de fonctionnement du dispositif selon l'invention dans lequel tant que α est inférieur à αr, le capteur de position 216 n'est pas activé et aucune information n'est transmise au calculateur 217. C'est le cas sur la figure 2, ou l'angle α1 est inférieur à l'angle de référence αr. Par contre, dès que - et tant que - α est supérieur à αr, le capteur de position 216 est activé et une information 300, dite information de dépassement d'angle limite, est transmise au calculateur 217. C'est le cas sur la figure 3, ou l'angle α2 est supérieur à l'angle de référence αr. Dans ce cas, le calculateur sollicite une information 301, dite information de consigne du moteur code virage 206. L'information de consigne 301 peut également être directement transmise par le calculateur 217.

Cette information révèle si le moteur 206 a effectivement reçu une instruction lui commandant de faire entrer le faisceau lumineux dans la zone d'éblouissement 214. Si c'est le cas, les informations 300 et 301 sont concordantes et on n'entre pas dans un mode de fonctionnement dégradé du projecteur. Si ce n'est pas le cas, c'est à dire si les informations 300 et 301 ne sont pas concordantes, le calculateur 217 transmet une instruction 302 au moteur de correction de portée 209 ou au dispositif de contrôle d'assiette du véhicule pour qu'il provoque l'inclinaison vers le bas du faisceau lumineux. L'inclinaison ordonnée par le calculateur 217 peut être plus importante que l'inclinaison qui pouvait être obtenue jusqu'alors au moyen des systèmes de correction automatique de portée d'éclairage. A cet effet, on peut par exemple prévoir un allongement de la tige 210 par rapport aux tiges similaires utilisées dans l'état de la technique.

Le projecteur est ainsi mis dans un mode de fonctionnement dégradé qui présente tout de même l'avantage de ne pas éblouir un conducteur croisé tout en conservant un faisceau lumineux utile à la conduite. Il permet donc, à différents points de vue et à titre d'exemple, la sécurisation du système de codes virages.

Selon différents types de réalisation du dispositif selon l'invention, le calculateur 217 peut être interne ou externe au projecteur 200 ; il peut gérer un unique côté du véhicule ou les deux côtés, c'est à dire qu'il peut piloter deux moteurs et un capteur, ou quatre moteurs et deux capteurs. La centralisation des fonctions de correction de portée et de code virage sur un unique module électronique peut permettre de simplifier l'interaction entre ces deux fonctions. Par ailleurs, le calculateur 217 peut aussi assurer la gestion d'autres fonctions, comme par exemple celle de commande de lampes.

Le dispositif selon l'invention a été décrit dans le cas de la conduite à droite. Il est bien évidemment adaptable pour la conduite à gauche : en se référant aux figures 2 et 3, il suffit de prendre pour direction horizontale limite de non éblouissement 213 une autre direction horizontale limite de non éblouissement qui est, par rapport à la direction horizontale de référence 204, la symétrique de celle représentée.

Enfin, il est évident que, même si les dispositifs projecteurs d'un véhicule sont le plus souvent présents par paires, le dispositif selon i'invention peut être mis en place pour un unique projecteur.

## Revendications

1. Dispositif de sécurité pour projecteur (200) de véhicule automobile (100), le projecteur (200) comportant au moins :
- une source lumineuse associée à un réflecteur pour produire un faisceau lumineux **caractérisé** notamment par une direction instantanée contenue dans un plan horizontal ou sensiblement horizontal;
- un mécanisme de déplacement horizontal du faisceau lumineux comportant notamment un premier moteur (206) pour faire évoluer la direction horizontale instantanée du faisceau lumineux; et
- un système de correction automatique de portée d'éclairage du projecteur comportant notamment un deuxième moteur (209), ou un dispositif de contrôle d'assiette du véhicule (100), pour faire évoluer verticalement le faisceau lumineux ; et le dispositif comportant :
- un capteur de position (216) pour déterminer une information relative à la direction instantanée du faisceau lumineux ; et
- des moyens (217) pour comparer l'information relative à la direction horizontale instantanée du faisceau lumineux et une commande (301) de déplacement horizontal du faisceau lumineux, lesdits moyens (217) pouvant actionner le deuxième moteur (209) du système de correction automatique de portée d'éclairage ou le dispositif de contrôle d'assiette du véhicule pour orienter le faisceau lumineux vers le bas lorsque l'information relative à la direction instantanée du faisceau lumineux et la commande (301) de déplacement horizontal du faisceau lumineux ne sont pas concordantes ;
**caractérisé en ce que** lesdits moyens sont constitués par un calculateur (217) qui n'autorise l'orientation vers le bas dudit faisceau d'éclairage que lorsque l'information relative à la direction instantanée du faisceau lumineux et la commande (301) de déplacement horizontal du faisceau lumineux ne sont pas concordantes, et que la valeur d'un angle (α) défini entre une direction de référence (204) et la direction instantanée est supérieure à la valeur d'un angle de référence (αr), l'angle de référence (αr) étant défini entre la direction de référence (204) et une direction limite de non éblouissement (213).

2. Dispositif selon la revendication précédente **caractérisé en ce que** la direction horizontale limite de non éblouissement (213) est définie uniquement d'un côté de la direction horizontale de référence (204).

3. Dispositif selon l'une au moins des revendications 1 ou 2 **caractérisé en ce que** la direction de référence (204) correspond à une direction instantanée du faisceau lumineux quand le véhicule (100) circule en ligne droite.

4. Dispositif selon l'une au moins des revendications 1 à 3 **caractérisé en ce que** l'angle de référence (αr) est compris entre 0 degré et 5 degrés, notamment entre 0,5 degré et 2 degrés.

5. Dispositif selon l'une au moins des revendications 1 à 4 **caractérisé en ce que** le capteur de position (216) est de type tout ou rien pour détecter uniquement le passage de la direction horizontale instantanée du faisceau lumineux au niveau de la direction horizontale limite de non éblouissement (213).

6. Dispositif selon l'une au moins des revendications précédentes **caractérisé en ce que** le capteur de position (216) est un capteur de lumière, notamment placé dans le projecteur (200), ou un capteur rotatif, notamment placé à une liaison placée entre une première platine (201) du projecteur (200), adaptée à la correction d'assiette, et une deuxième platine (202) du projecteur (200), mobile par rapport à la première platine (201).

7. Dispositif selon l'une au moins des revendications précédentes **caractérisé en ce que** le calculateur (217) est monté dans le projecteur (200) ou hors du projecteur (200).

8. Dispositif selon l'une au moins des revendications précédentes **caractérisé en ce que** le capteur de position (216) est monté sur une première platine (201) du projecteur (200).

9. Dispositif selon l'une au moins des revendications 1 à 7 **caractérisé en ce que** le capteur de position (216) est monté sur une deuxième platine (202) du projecteur (200), mobile par rapport à une première platine (201) du projecteur (200).

10. Dispositif selon l'une au moins des revendications précédentes **caractérisé en ce que** chaque projecteur (200) est associé à un calculateur (217).

11. Dispositif selon l'une au moins des revendications 1 à 9 **caractérisé en ce que** deux projecteurs (200) identiques sont associés à un unique calculateur (217).

12. Dispositif selon l'une au moins des revendications précédentes **caractérisé en ce que** l'orientation du faisceau lumineux vers le bas suite à l'actionnement du deuxième moteur (209) par le calculateur (217) permet d'obtenir un faisceau lumineux (104) orienté plus bas qu'avec le système de correction automatique de portée d'éclairage commandant le deuxième moteur (209) sans l'intervention du calculateur (217).

13. Dispositif selon l'une au moins des revendications précédentes **caractérisé en ce que** le projecteur (200) associé au système de correction est un feu de croisement.

14. Dispositif selon l'une au moins des revendications précédentes **caractérisé en ce que** le mécanisme de déplacement horizontal du faisceau lumineux est automatiquement actionné lorsque le véhicule automobile (100) évolue dans un virage (101) de façon à éclairer de façon optimale la trajectoire empruntée par le véhicule (100).

15. Véhicule automobile équipé d'un dispositif de sécurité selon l'une des revendications précédentes.

16. Véhicule automobile selon la revendication précédente **caractérisé en ce que** le dispositif de sécurité comporte notamment un calculateur (217) commun à deux projecteurs (200) ayant la même fonction, le calculateur (217) étant disposé à l'extérieur des projecteurs (200), ou un calculateur (217) affecté à chaque projecteur (200), chaque calculateur (217) étant disposé à l'intérieur de chaque projecteur (200).

17. Véhicule automobile selon l'une au moins des revendications 15 ou 16 **caractérisé en ce qu'**il comporte un système de contrôle d'assiette intervenant dans le dispositif de sécurité.

## Patentansprüche

1. Sicherheitsvorrichtung für Scheinwerfer (200) von Kraftfahrzeugen (100), wobei der Scheinwerfer (200) wenigstens umfasst:
- eine Lichtquelle, die einem Reflektor zugeordnet ist, um ein Lichtbündel zu erzeugen, das insbesondere durch eine momentane Richtung **gekennzeichnet** ist, die in einer horizontalen oder im Wesentlichen horizontalen Ebene enthalten ist;
- einen Mechanismus zum horizontalen Verschieben des Lichtbündels, der insbesondere einen ersten Motor (206) umfasst, um die momentane horizontale Richtung des Lichtbündels zu verändern; und
- ein System zur automatischen Leuchtweiteregelung des Scheinwerfers, das insbesondere einen zweiten Motor (209) umfasst, oder eine Vorrichtung zur Fahrzeugniveaukontrolle (100), um das Lichtbündel vertikal zu verändern; und wobei die Vorrichtung umfasst:
- einen Positionssensor (216), um eine Information über die momentane Richtung des Lichtbündels zu ermitteln; und
- Mittel (217), um die Information über die momentane horizontale Richtung des Lichtbündels mit einem Befehl (301) zum horizontalen Verschieben des Lichtbündels zu vergleichen, wobei die Mittel (217) den zweiten Motor (209) des Systems zur automatischen Leuchtweiteregelung oder die Vorrichtung zur Fahrzeugniveaukontrolle betätigen können, um das Lichtbündel nach unten auszurichten, wenn die Information über die momentane Richtung des Lichtbündels und der Befehl (301) zum horizontalen Verschieben des Lichtbündels nicht konkordant sind;
**dadurch gekennzeichnet, dass** die Mittel von einem Rechner (217) gebildet sind, der die Ausrichtung des Lichtbündels nach unten nur gestattet, wenn die Information über die momentane Richtung des Lichtbündels und der Befehl (301) zum horizontalen Verschieben des Lichtbündels nicht konkordant sind und der Wert eines zwischen einer Bezugsrichtung (204) und einer momentanen Richtung gebildeten Winkels (α) größer ist als der Wert eines Bezugswinkels (αr), wobei der Bezugswinkel (αr) zwischen der Bezugsrichtung (204) und einer maximalen blendfreien Richtung (213) gebildet wird.

2. Vorrichtung nach dem vorhergehenden Anspruch,
**dadurch gekennzeichnet, dass** die maximale blendfreie horizontale Richtung (213) nur von einer Seite der horizontalen Bezugsrichtung (204) gebildet wird.

3. Vorrichtung nach wenigstens einem der Ansprüche 1 oder 2,
**dadurch gekennzeichnet, dass** die Bezugsrichtung (204) einer momentanen Richtung des Lichtbündels entspricht, wenn das Fahrzeug (100) geradeaus fährt.

4. Vorrichtung nach wenigstens einem der Ansprüche 1 bis 3,
**dadurch gekennzeichnet, dass** der Bezugswinkel (αr) zwischen 0 Grad und 5 Grad, insbesondere zwischen 0,5 Grad und 2 Grad liegt.

5. Vorrichtung nach wenigstens einem der Ansprüche 1 bis 4,
**dadurch gekennzeichnet, dass** der Positionssensor (216) nach dem Alles-oder-Nichts-Prinzip funktioniert, um ausschließlich den Übergang von der momentanen horizontalen Richtung des Lichtbündels zum Niveau der maximalen blendfreien horizontalen Richtung (213) zu erfassen.

6. Vorrichtung nach wenigstens einem der vorhergehenden Ansprüche,
**dadurch gekennzeichnet, dass** der Positionssensor (216) ein Lichtsensor ist, der insbesondere in dem Scheinwerfer (200) angeordnet ist, oder ein Drehsensor, der insbesondere an einer Verbindung platziert ist, die zwischen einer ersten, für die Niveaukorrektur geeigneten Platte (210) des Scheinwerfers (200) und einer zweiten, bezüglich der ersten Platte (201) beweglichen Platte (202) des Scheinwerfers (200) angeordnet ist.

7. Vorrichtung nach wenigstens einem der vorhergehenden Ansprüche,
**dadurch gekennzeichnet, dass** der Rechner (217) im Scheinwerfer (200) oder außerhalb des Scheinwerfers (200) angebracht ist.

8. Vorrichtung nach wenigstens einem der vorhergehenden Ansprüche,
**dadurch gekennzeichnet, dass** der Positionssensor (216) auf einer ersten Platte (201) des Scheinwerfers (200) angebracht ist.

9. Vorrichtung nach wenigstens einem der vorhergehenden Ansprüche 1 bis 7,
**dadurch gekennzeichnet, dass** der Positionssensor (216) auf einer zweiten Platte (202) des Scheinwerfers (200) angebracht ist, die bezüglich einer ersten Platte (201) des Scheinwerfers (200) beweglich ist.

10. Vorrichtung nach wenigstens einem der vorhergehenden Ansprüche,
**dadurch gekennzeichnet, dass** jeder Scheinwerfer (200) einem Rechner (216) zugeordnet ist.

11. Vorrichtung nach wenigstens einem der vorhergehenden Ansprüche 1 bis 9,
**dadurch gekennzeichnet, dass** zwei identische Scheinwerfer (200) einem einzigen Rechner (217) zugeordnet sind.

12. Vorrichtung nach wenigstens einem der vorhergehenden Ansprüche,
**dadurch gekennzeichnet, dass** es durch die Ausrichtung des Lichtbündels nach unten infolge der Betätigung des zweiten Motors (209) durch den Rechner (217) möglich ist, ein Lichtbündel (104) zu erzielen, das stärker nach unten ausgerichtet ist, als mit dem System zur automatischen Leuchtweiteregelung, das den zweiten Motor (209) ohne Beteiligung des Rechners (217) betätigt.

13. Vorrichtung nach wenigstens einem der vorhergehenden Ansprüche,
**dadurch gekennzeichnet, dass** der dem Regelungssystem zugeordnete Scheinwerfer (200) ein Abblendlichtscheinwerfer ist.

14. Vorrichtung nach wenigstens einem der vorhergehenden Ansprüche,
**dadurch gekennzeichnet, dass** der Mechanismus zum horizontalen Verschieben des Lichtbündels automatisch betätigt wird, wenn das Kraftfahrzeug in eine Kurve (101) fährt, um die von dem Fahrzeug (100) befahrene Strecke optimal auszuleuchten.

15. Kraftfahrzeug, das mit einer Sicherheitsvorrichtung nach einem der vorhergehenden Ansprüche ausgestattet ist.

16. Kraftfahrzeug nach dem vorhergehenden Anspruch,
**dadurch gekennzeichnet, dass** die Sicherheitsvorrichtung insbesondere einen Rechner (217) umfasst, der zwei Scheinwerfern (200) gemeinsam ist, die die gleiche Funktion haben, wobei der Rechner (217) außerhalb der Scheinwerfer (200) angeordnet ist, oder einen Rechner (217), der jeweils einem Scheinwerfer (200) zugeordnet ist, wobei jeder Rechner (217) innen in jedem Scheinwerfer (200) angeordnet ist.

17. Kraftfahrzeug nach wenigstens einem der Ansprüche 15 oder 16,
**dadurch gekennzeichnet, dass** es ein System zur Niveaukontrolle umfasst, das an der Sicherheitsvorrichtung mitwirkt.

## Claims

1. A safety device for a headlight (200) for a motor vehicle (100), the headlight (200) comprising at least:
- a light source associated with a reflector for producing a light beam which is, in particular, **characterised by** an instantaneous direction contained in a horizontal or substantially horizontal plane;
- a mechanism for horizontal displacement of the light beam, comprising in particular a first motor (206) for controlling the instantaneous horizontal direction of the light bean; and
- a system for automatic correction of the range over which the headlight illuminates, comprising in particular a second motor (209) or a device for controlling the attitude of the vehicle (100) whereby to adjust the light beam vertically;
and the device comprising:
- a position sensor (216) for determining information relating to the instantaneous direction of the light beam; and
- means (217) for comparing the information relating to the instantaneous horizontal direction of the light beam with a command (301) for horizontal displacement of the light beam, the said means (217) being capable of actuating the second motor (209) of the automatic system for correcting the illumination range, or the device for controlling the attitude of the vehicle, whereby to orientate the light beam downwards when the information relating to the instantaneous direction of the light beam and the command (301) for horizontal displacement of the light beam are not in concordance with each other;
**characterised in that** the said means comprise a computer (217) which will permit downward orientation of the said light beam only when the information relating to the instantaneous direction of the light beam and the command (301) for horizontal displacement of the light beam are not in concordance with each other, and only when an angle (α) defined between a reference direction (204) and the instantaneous direction is greater than the value of a reference angle (αᵣ), the reference angle (αᵣ) being defined between the reference direction (204) and a non-dazzling limit direction (213).

2. A device according to Claim 1, **characterised in that** the non-dazzling limit direction (213) is defined only on one side of the horizontal reference direction (204).

3. A device according to at least one of Claims 1 and 2, **characterised in that** the reference direction (204) corresponds to an instantaneous direction of the light beam when the vehicle (100) is travelling in a straight line.

4. A device according to at least one of Claims 1 to 3, **characterised in that** the reference angle (αᵣ) is in the range between 0 degrees and 5 degrees, and especially between 0.5 degrees and 2 degrees.

5. A device according to at least one of Claims 1 to 4, **characterised in that** the position sensor (216) is of the yes or no type, whereby to detect only the passage of the instantaneous horizontal direction of the light beam at the level of the horizontal non-dazzle limit direction (213).

6. A device according to at least one of the preceding Claims, **characterised in that** the position sensor (216) is either a light sensor, especially one which is located inside the headlight (200), or a rotary sensor, especially one which is located at a connection placed between a first platen (201) of the headlight (200), which is adapted for attitude correction, and a second platen (202) of the headlight (200), which is movable with respect to the first platen (201).

7. A device according to at least one of the preceding Claims, **characterised in that** the computer (217) is mounted either inside the headlight (200) or outside the headlight (200).

8. A device according to at least one of the preceding Claims, **characterised in that** the position sensor (216) is mounted on a first platen (201) of the headlight (200).

9. A device according to at least one of Claims 1 to 7, **characterised in that** the position sensor (216) is mounted on a second platen (202) of the headlight (200), which is movable with respect to a first platen (201) of the headlight (200).

10. A device according to at least one of the preceding Claims, **characterised in that** each headlight (200) is associated with a computer (217).

11. A device according to at least one of Claims 1 to 9, **characterised in that** two identical headlights (200) are associated with a single computer (217).

12. A device according to at least one of the preceding Claims, **characterised in that** the downward orientation of the light beam that results from the operation of the second motor (209) by the computer (217) enables a light beam to be obtained which is oriented lower down than if the system for automatic correction of the illumination range were controlling the second motor (209) without intervention by the computer (217).

13. A device according to at least one of the preceding Claims, **characterised in that** the headlight (200) associated with the correction system is a passing-beam light.

14. A device according to at least one of the preceding Claims, **characterised in that** the mechanism for horizontal displacement of the light beam is activated automatically when the motor vehicle (100) enters a bend (101), whereby to give optimum illumination of the path followed by the vehicle (100).

15. A motor vehicle equipped with a safety device according to one of the preceding Claims.

16. A motor vehicle according to Claim 15, **characterised in that** the safety device includes, in particular, either a computer (217) which is common to two headlights (200) having the same function, the computer (217) being disposed on the outside of the headlights (200), or a computer (217) associated with each headlight (200), each computer then being disposed inside each headlight (200).

17. A motor vehicle according to at least one of Claims 15 and 16, **characterised in that** it includes an attitude control system acting within the safety device.
